# EUROPEAN PATENT APPLICATION

(11) **EP 4 261 406 A1**
(43) Date of publication of application: **18.10.2023**
(21) Application number: 22167720.6
(22) Date of filing: 11.04.2022
(51) Int. Cl.: F03D 7/02, F03D 17/00

(54) **A METHOD FOR EARLY IDENTIFICATION OF MATERIAL FATIGUE IN WIND TURBINE INSTALLATIONS**

(71) Applicant: Ørsted Wind Power A/S, 7000 Fredericia (DK)
(72) Inventor: MADSEN, Mathias Bækdal, DK-2820 Gentofte (DK); MAHULJA, Stjepan, DK-2820 Gentofte (DK); PEDERSEN, Andreas Søndergaard, DK-2820 Gentofte (DK)
(74) Representative: Ablett, Graham Keith

(57) **Abstract**

A method is described for the early identification of material fatigue in drive train components of a wind turbine installation.

In particular, a signal, representing revolutions per minute of a wind turbine shaft, is obtained and modulated by the azimuth angle measurement of the turbine blade. This signal is band passed at twice the frequency of rotation and Fourier transformed to extract amplitude values. An alert response can then be triggered when it is determined that there has been a change in a characteristic of the amplitude values such as the amplitude values increasing beyond a multiple of a determined baseline amplitude value.

## Description

The present invention concerns a method for the early identification of material fatigue in wind turbine installations, and in particular fatigue in the wind turbine drive train components to enable triggering of an alert response.

Offshore and onshore wind turbine installations have become an increasingly important part of our energy supply infrastructure. They are typically installed in remote locations, often in a marine environment. A conventional wind turbine installation has a nacelle provided on top of a wind turbine tower, itself supported by a monopile, jacket or a similar foundation type or indeed a floating platform. The nacelle has a shaft with a hub at its front for receiving the wind turbine blades. The shaft forms part of the drive train components including the bearings and other components connecting the rotation of the blades to the electrical generator.

Wind turbine drive train components are subjected to huge variations in load as wind speeds and directions change, as well as large variations in thermal stresses with changing weather conditions. The impact of these variations is increased as larger wind turbine installations with even larger wind turbine blades are adopted in response to increased demand for renewable energy supplies.

Maintenance and repair operations for wind turbine installations are expensive and hazardous partly because the installations are typically located offshore or in otherwise remote locations, and partly because important components are located at the top of the tower making access difficult. Harsh weather conditions may also limit the accessibility to the wind turbine for technicians rendering maintenance work unavailable for longer periods of time.

Furthermore, where failure occurs unexpectedly, it can take time to arrange for a repair crew with suitable equipment and vessel to reach the site to perform the necessary repairs. As such, generator down times can be significant. Moreover, catastrophic failures in one part of the wind turbine installation can also lead to damage to other parts of the assembly. Again, because of the unique difficulties and hazards of accessing the site, these repairs can be much more challenging than they would in other applications.

Thus, it would be helpful to be able to have indications of potential failure in order to schedule maintenance and to avoid expensive down time and repair, and possible injury. Avoiding catastrophic failure in the wind turbine components will assist with maintenance and repair operations can be scheduled. Consequently, active monitoring of wind turbine components for signs of fatigue or wear is a useful tool to assist with this.

Wind turbine installations include a turbine condition monitoring (TCM) controller that controls the operation of the turbine. This controller receives data from many different sensors and sensor types throughout the installation and looks for conditions that are critical or need further inspection. The controller may stop the turbine in case something is detected that that may harm the turbine. A turbine controller system is also included which monitors the installation for a vast number of conditions that may damage or negatively impact on the performance of the installation within the next year or similar. This can include drive train oscillations, current and voltage, the gear oil temperature and rotor unbalance.

With regard to the drive train components of the wind turbine, for example the rotor/shaft, bearings, etc., less attention has been paid to monitoring for signs of fatigue or wear. The present invention seeks to provide an improved early identification of material fatigue in the drive train components to enable triggering of an alert response whereby maintenance and repair of the drive train components can take place in a controlled and scheduled way.

According to an aspect of the present invention, there is provided a method for the early identification of material fatigue in drive train components of a wind turbine installation, the method comprising: determining rotational data of a drive train component for complete rotations thereof; extracting amplitude values from the rotational data based on twice the frequency of rotation; monitoring the extracted amplitude values over time; triggering an alert response when a change in a characteristic of the amplitude values is determined.

In this way, when there is a change in a characteristic, an alert can be triggered which shows early identification of material fatigue in the drive train component.

In one embodiment, the change in characteristic of the amplitude values comprises the amplitude values increasing beyond a threshold value.

In a particular case, a baseline amplitude value for healthy drive train components is determined; and the threshold value is set as a multiple of the determined baseline amplitude value.

In one embodiment, the threshold value is set in the range of two to five times the baseline amplitude value.

In another embodiment, the change in characteristic of the amplitude values comprises a change in the gradient of the amplitude values.

In one case, determining rotational data of a drive train component comprises determining the rotational speed of the wind turbine shaft.

In one embodiment, triggering an alert response comprises initiating scheduling of maintenance.

In another embodiment, triggering an alert response comprises deactivating the wind turbine installation.

It is possible to have differing alert responses which are triggered according to different changes in a characteristic of the amplitude values.

In one embodiment, extracting amplitude values comprises: obtaining a signal representing revolutions per minute of a drive component; modulating the obtained signal by the azimuth angle measurement of the turbine blade; band passing the modulated signal at twice the frequency of rotation; and Fourier transforming the band passed signal to extract amplitude values.

According to a further aspect, there is provided a computer program product comprising instructions which, when executed by a processor, cause the processor to execute the method to the above.

According to a further aspect, there is provided a non-transitory computer readable medium comprising instructions which, when executed by a processor, cause the processor to execute the method according to the method to the above.

An illustrative embodiment of the present invention will now be described with reference to the accompanying drawings in which:-
Figure 1 shows amplitude value waveforms for the shafts of a number of different wind turbine installations for an interval of a number of years; and
Figure 2 shows amplitude value waveforms for the shafts of a number of different wind turbine installations for an interval of a month.

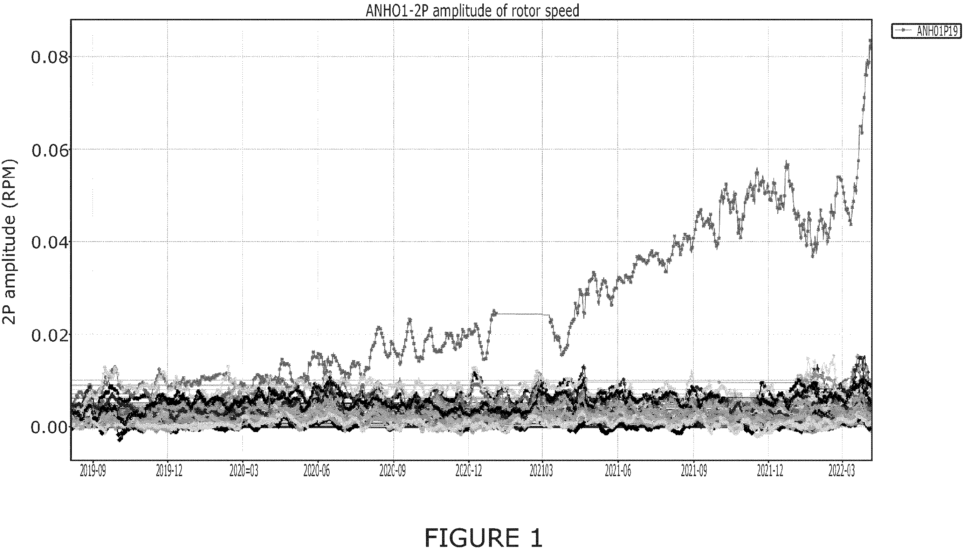

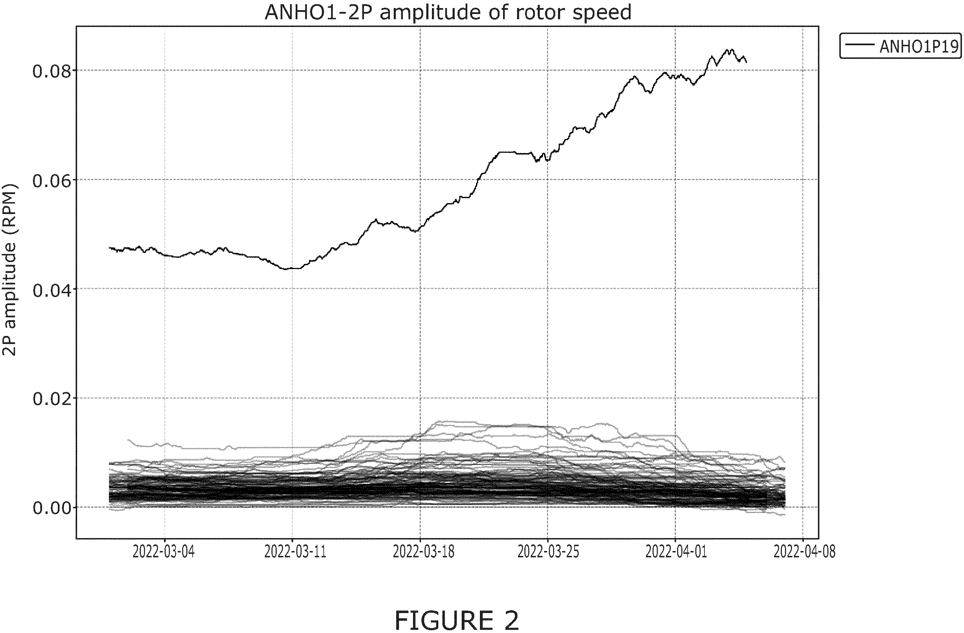

An illustrative embodiment of the present invention will now be described with reference to figures 1 and 2.

Those skilled in the art will appreciate that various parameters of a wind turbine installation are monitored as it operates. One of the parameters that is monitored is the rotational velocity of the rotor/shaft(s).

In this respect, 1P rotational data (based on once per rotation) is used to look for events that happen for every rotation, for example a faulty blade. Similarly, 3P-based data (based on three times the frequency of rotation) may be used to look for events happening three times per rotation. This typically corresponds to events happening every time a blade passes in front of the tower.

The inventors have realised that when a crack first appears in the rotor/shaft, it will excite the rotor speed twice per revolution of the rotor. In effect, the shaft will wobble between two positions during a complete rotation.

They have also realised that as the crack develops, the level of excitement will increase. In addition, if a further crack develops, there will be a corresponding further increase in the level of excitement. Consequently, providing an effective way to monitor the level of excitement over time offers an opportunity to provide early identification of material fatigue in the components of the drive train.

The inventors have therefore realised that useful information can be obtained by using 2P frequencies (based on twice the frequency of rotation) even though this runs counter to common knowledge in the field of wind turbine installations. Indeed, current turbine controller systems do not analyse received sensor data for 2P frequencies.

Accordingly, a signal representing revolutions per minute of the shaft is obtained and modulated by the rotor azimuth angle measurement. The resulting signal is then band passed at twice the frequency of rotation of the wind turbine blades and Fourier transformed. Amplitude values of the shaft rotation speed can then be extracted from the Fourier transform and monitored over time. Those skilled in the art will readily appreciate how to monitor and obtain the amplitude values in this way.

An example of such a waveform of monitored amplitude values for a number of wind turbine installations is shown in figure 1. Each point in the waveform is an amplitude value as a rolling median for 10 days and the Y axis represents the 2P variations in the rotation speed. The X axis represents time.

Figure 1 shows waveforms for the shafts of a number of different wind turbine installations. It can be seen that at 2019-09 all the waveforms are bunched together with an amplitude value in the region of 0.00 to 0.01. These represent the drive trains of wind turbine installations which do not show signs of material fatigue. Thus, a typical healthy drive trains produces a baseline signal having baseline amplitude values in the range of -0.01 to 0.01.

However, it can be seen that between 2020-03 and 2020-06 a single waveform starts to show larger amplitude values and by 2020-09 is clearly separate from the remaining bunched waveforms. This waveform represents that the particular drive train in question is showing signs of material fatigue, in particular that a crack has developed in the shaft which is slowly propagating or increasing in size. The data immediately prior to 2021-03 is absent.

It can also be seen that the amplitude values are gradually increasing on a fairly constant gradient and by 2021-04 the amplitude value is approximately a multiple of two times the baseline amplitude value. A first approximate gradient line has been drawn in the figure through the data points of the waveform for the time interval.

However, between 2021-03 and 2021-06, there is a change in gradient of the particular drive train in question. A second approximate gradient line has been drawn in the figure through the data points of the waveform for this time interval. The inventors believe that this change represents the development of a further crack. It can be seen that by 2021-09 the amplitude value is now approximately a multiple of four times the baseline amplitude value.

Around 2022-03, it can be seen that the amplitude values for the particular drive train in question have started to increase quite significantly. A third approximate gradient line has been drawn in the figure through the data points of the waveform for this time interval. Figure 2 shows these amplitude values over a shorter timescale. By approximately 2022-03-27, the amplitude value is now approximately a multiple of five times the baseline amplitude value and shortly before the critical failure when amplitude values stop.

It will be appreciated that the characteristics of the waveform have changed over time. In this respect, in one embodiment, a threshold value is set at which an alert response, such as an alarm, is triggered. The threshold value can be set as a multiple of the change relative to the baseline amplitude value, for example anywhere between two and five times the baseline amplitude value.

In another embodiment, a change in gradient is set at which an alert response, such as an alarm, is triggered.

In either case, the alert response can be tailored to be a forewarning that components in the drive train, for example the rotor/shaft, will need replacing or that the wind turbine installation should be taken out of service. It will be appreciated that different multiples of change relative to the baseline amplitude can trigger different tailored alert responses.

It will be understood that the embodiment illustrated above show applications of the invention only for the purposes of illustration. In practice the invention may be applied to many different configurations, the detailed embodiments being straightforward for those skilled in the art to implement.

For example, greater accuracy of monitoring should be possible if the data used in figure 1 is picked up from other wind turbine installations in the wind farm that are of the same build and model. This data can then be used to provide a more accurate baseline signal. This allows for better calibration of the data because the data may not be uniform across different turbines at different sites under different conditions.

It will also be appreciated that vibrations on the main bearing may generate data that can be used for the early identification of material fatigue. These vibrations can be detected by one or more vibration sensors that may be situated on or near the main bearing or the gear box. Strain gauges on the main bearing or shaft or any other relevant place may also be able to pick up data that can be used for detecting developing cracks. A person skilled in the art will understand that tower top accelerators or any other sensors may provide data to foreshadow material fatigue.

## Claims

1. A method for the early identification of material fatigue in drive train components of a wind turbine installation, the method comprising:-
determining rotational data of a drive train component for complete rotations thereof;
extracting amplitude values from the rotational data based on twice the frequency of rotation;
monitoring the extracted amplitude values over time;
triggering an alert response when a change in a characteristic of the amplitude values is determined.

2. A method according to claim 1 wherein the change in characteristic of the amplitude values comprises the amplitude values increasing beyond a threshold value.

3. A method according to claim 2 comprising:-
determining a baseline amplitude value for healthy drive train components; and
wherein the threshold value is set as a multiple of the determined baseline amplitude value.

4. A method according to claim 3 wherein the threshold value is set in the range of two to five times the baseline amplitude value.

5. A method according to claim 1 wherein the change in characteristic of the amplitude values comprises a change in the gradient of the amplitude values.

6. A method according to any preceding claim wherein determining rotational data of a drive train component comprises determining the rotational speed of the wind turbine shaft.

7. A method according to any preceding claim wherein triggering an alert response comprises initiating scheduling of maintenance.

8. A method according to any preceding claim wherein triggering an alert response comprises deactivating the wind turbine installation.

9. A method according to any preceding claim wherein differing alert responses are triggered according to different changes in a characteristic of the amplitude values.

10. A method according to any preceding claim wherein extracting amplitude values comprises:-
obtaining a signal representing revolutions per minute of a drive component;
modulating the obtained signal by the azimuth angle measurement of the turbine blade;
band passing the modulated signal at twice the frequency of rotation; and
Fourier transforming the band passed signal to extract amplitude values.

11. A computer program product comprising instructions which, when executed by a processor, cause the processor to execute the method according to any preceding claim.

12. A non-transitory computer readable medium comprising instructions which, when executed by a processor, cause the processor to execute the method according to any of claims 1 to 10.
